# EUROPEAN PATENT APPLICATION

(11) **EP 3 324 357 A1**
(43) Date of publication of application: **23.05.2018**
(21) Application number: 16824209.7
(22) Date of filing: 17.06.2016
(51) Int. Cl.: G06Q 50/10

(54) **PROVIDING APPARATUS, USE APPARATUS, COMMUNICATION RESOURCES TRANSACTION SYSTEM, PROVIDING METHOD,USE METHOD, AND CONTROL APPARATUS**

(30) Priority: 16.07.2015 JP 2015142271
(71) Applicant: Sony Corporation, Tokyo 108-0075 (JP); Sony Interactive Entertainment Inc., Tokyo 108-0075 (JP)
(72) Inventor: KIKKAWA, Norifumi, Tokyo 108-0075 (JP); SAITO, Shin, Tokyo 108-0075 (JP); MIYAZAKI, Yoshio, Tokyo 108-0075 (JP)
(74) Representative: Witte, Weller & Partner Patentanwälte mbB
(86) International application number: PCT/JP2016/068076
(87) International publication number: WO 2017/010229

(57) **Abstract**

[Object] To provide a providing apparatus which enables sharing of radio communication resources among users while flexibly reflecting intention of users to utilize radio communication resources.

[Solution] Provided is a providing apparatus including: a control unit configured to provide radio communication resources allocated to an own user to another user in response to a request from the another user; and an acquiring unit configured to acquire a reward in service of application which uses radio communication resources in accordance with an amount of the radio communication resources provided to the another user.

## Description

### Technical Field

The present disclosure relates to a providing apparatus, a utilizing apparatus, a communication resource trading system, a providing method, a utilizing method, and a control apparatus.

### Background Art

In accordance with spread of apparatuses which can perform radio communication, measures as to how users are allowed to utilize limited radio communication resources have been proposed. Here, the radio communication resources refer to, for example, communication band used in radio communication. For example, Patent Literature 1, or the like, discloses a technology which enables trading of communication band to share communication band among users.

### Citation List

### Patent Literature

Patent Literature 1: JP 2010-527073T

### Disclosure of Invention

### Technical Problem

However, in the existing technology, because communication band is shared among users after communication band is traded in advance, it is difficult to utilize this existing technology in the case where demand for communication band cannot be predicted in advance.

Therefore, the present disclosure proposes new and improved providing apparatus, utilizing apparatus, communication resource trading system, providing method, utilizing method and control apparatus which enable sharing of radio communication resources among users while flexibly reflecting intention of users to utilize radio communication resources.

### Solution to Problem

According to the present disclosure, there is provided a providing apparatus including: a control unit configured to provide radio communication resources allocated to an own user to another user in response to a request from the another user; and an acquiring unit configured to acquire a reward in service of application which uses radio communication resources in accordance with an amount of the radio communication resources provided to the another user.

Further, according to the present disclosure, there is provided a utilizing apparatus including: a control unit configured to perform processing for requesting radio communication resources allocated to another user and bearing a predetermined burden regarding service of application which uses the radio communication resources in return for utilizing the radio communication resources.

Further, according to the present disclosure, there is provided a communication resource trading system including: a providing apparatus which includes a provision control unit configured to provide radio communication resources allocated to an own user to another user in response to a request from the another user, and an acquiring unit configured to acquire a reward in accordance with an amount of the radio communication resources provided to the another user; and a utilizing apparatus which includes a utilization control unit configured to request radio communication resources allocated to the first user and bear a predetermined burden regarding service of application which uses the radio communication resources in return for utilizing the radio communication resources.

Further, according to the present disclosure, there is provided a providing method including: providing radio communication resources allocated to an own user to another user in response to a request from the another user; and acquiring a reward in service of application which uses radio communication resources in accordance with an amount of the radio communication resources provided to the another user.

Further, according to the present disclosure, there is provided a utilizing method including: a control unit configured to request radio communication resources allocated to another user and bear a predetermined burden regarding service of application which uses the radio communication resources in return for utilizing the radio communication resources.

Further, according to the present disclosure, there is provided a control apparatus including: a control unit configured to allocate radio communication resources allocated to a first user to a second user in response to a request from the second user and provide a reward in service of application which uses the radio communication resources in accordance with an amount of the radio communication resources allocated to the second user, to the first user.

### Advantageous Effects of Invention

As described above, according to the present disclosure, it is possible to provide new and improved providing apparatus, utilizing apparatus, communication resource trading system, providing method, utilizing method and control apparatus which enable sharing of radio communication resources among users while flexibly reflecting intention of users to utilize radio communication resources.

Note that the effects described above are not necessarily limitative. With or in the place of the above effects, there may be achieved any one of the effects described in this specification or other effects that may be grasped from this specification.

### Brief Description of Drawings

[FIG. 1] FIG. 1 is an explanatory diagram illustrating a configuration example of a communication resource trading system 10 according to an embodiment of the present disclosure.
[FIG. 2] FIG. 2 is an explanatory diagram illustrating a functional configuration example of a communication resource providing apparatus 100 constituting the communication resource trading system 10 according to the embodiment.
[FIG. 3] FIG. 3 is an explanatory diagram illustrating a functional configuration example of a communication resource utilizing apparatus 200 constituting the communication resource trading system 10 according to the embodiment.
[FIG. 4] FIG. 4 is an explanatory diagram illustrating a functional configuration example of a communication resource trading server 300 constituting the communication resource trading system 10 according to the embodiment.
[FIG. 5] FIG. 5 is a sequence diagram illustrating an operation example of the communication resource trading system 10 according to the embodiment.
[FIG. 6] FIG. 6 is an explanatory diagram illustrating an embodiment of the communication resource trading system 10 according to the embodiment.
[FIG. 7] FIG. 7 is an explanatory diagram illustrating an embodiment of the communication resource trading system 10 according to the embodiment.
[FIG. 8] FIG. 8 is an explanatory diagram illustrating an aspect where information is displayed at a display unit 240 of the communication resource utilizing apparatus 200.
[FIG. 9] FIG. 9 is an explanatory diagram illustrating an example of a user interface displayed at the communication resource providing apparatus 100.
[FIG. 10] FIG. 10 is an explanatory diagram illustrating an example of a user interface displayed at the communication resource providing apparatus 100.
[FIG. 11] FIG. 11 is an explanatory diagram illustrating an embodiment of the communication resource trading system 10 according to the embodiment.
[FIG. 12] FIG. 12 is an explanatory diagram illustrating an embodiment of the communication resource trading system 10 according to the embodiment.
[FIG. 13] FIG. 13 is an explanatory diagram explaining a hardware configuration of the communication resource trading server 300 according to the embodiment.
[FIG. 14] FIG. 14 is an explanatory diagram explaining hardware configurations of the communication resource providing apparatus 100 and the communication resource utilizing apparatus 200 according to the embodiment.

### Mode(s) for Carrying Out the Invention

Hereinafter, preferred embodiments of the present disclosure will be described in detail with reference to the appended drawings. In this specification and the appended drawings, structural elements that have substantially the same function and structure are denoted with the same reference numerals, and repeated explanation of these structural elements is omitted.

Note that description will be provided in the following order.
1. Embodiments of present disclosure
   1.1. Background
   1.2. Configuration example
   1.3. Operation example
2. Hardware configuration example
3. Conclusion

### <1. Embodiments of present disclosure>

### [1.1. Background]

First, before embodiments of the present disclosure are described in detail, background of the embodiments of the present disclosure will be described.

In accordance with spread of apparatuses which can perform radio communication, in an area where a number of users who utilize radio communication exist, a situation occurs where necessary and sufficient band cannot be always allocated to all the users. Therefore, measures as to how users are allowed to utilize limited radio communication resources have been proposed. For example, telecommunications carriers which provide Internet connection using wide area radio communication such as long term evolution (LTE) suppress unlimited or unregulated Internet connection by users using measures such as charging at a metered rate in accordance with a communication amount, and speed limit if a communication amount per month reaches a predetermined amount.

However, if telecommunications carriers take such measures, a user needs to utilize Internet connection while caring about a communication amount. Therefore, the telecommunications carriers dispose access points which enable short-distance radio communication such as Wi-Fi connected to wired Internet in crowded areas such as stations and stores to reduce an amount of wide area radio communication. A user can utilize the Internet without caring about a communication amount of wide area radio communication by connecting a terminal to the access point to perform Internet connection via the access point.

However, providing access points at all locations involves a significant cost for telecommunications carriers. Further, at a location where a radio wave from an access point cannot reach, a user cannot perform Internet connection via the access point.

Wide area radio communication has a mechanism in which a base station sets priority of communication for each terminal, which makes band to be more easily allocated to communication with higher priority. However, while determination as to which communication should be prioritized requires knowledge of an application layer, the base station does not have this knowledge. Therefore, it is impossible to perform flexible operation based on intention of users even if a mechanism for setting priority of communication is used.

An existing wide area communication network does not have a structure in which a plurality of logical networks can be flexibly constructed. Therefore, it is impossible to provide a logical network which has policy dedicated for each user. Accordingly, it is impossible to perform flexible operation based on intention of users.

Therefore, a technology which enables trading of communication band so that communication band which is unnecessary for one user is provided to another user has been proposed. For example, Patent Literature 1, or the like, discloses a technology which enables trading of communication band to share communication band among users. However, because, in the existing technology, communication band is shared among users after communication band is traded in advance, it is difficult to utilize this existing technology in the case where demand for communication band cannot be predicted in advance. Further, in all the existing technologies, it is only assumed that a user is charged upon trading of communication band, and it is not assumed that other rewards are provided upon trading of communication band.

Therefore, in view of the above-described background, the present discloser has examined hard a technology which enables sharing of radio communication resources among users while flexibly reflecting intention of users to utilize radio communication resources. As a result, the present discloser has devised a technology which enables sharing of radio communication resources among users while flexibly reflecting intention of users to utilize radio communication resources by providing radio communication resources allocated to one user to another user in response to a request from the another user and providing a reward in accordance with an amount of the radio communication resources provided to the another user, to a provider of the radio communication resources.

The background of the embodiments of the present disclosure has been described above.

### [1.2. Configuration example]

### [1.2.1. System configuration example]

Subsequently, a configuration example of a communication resource trading system according to an embodiment of the present disclosure will be described.

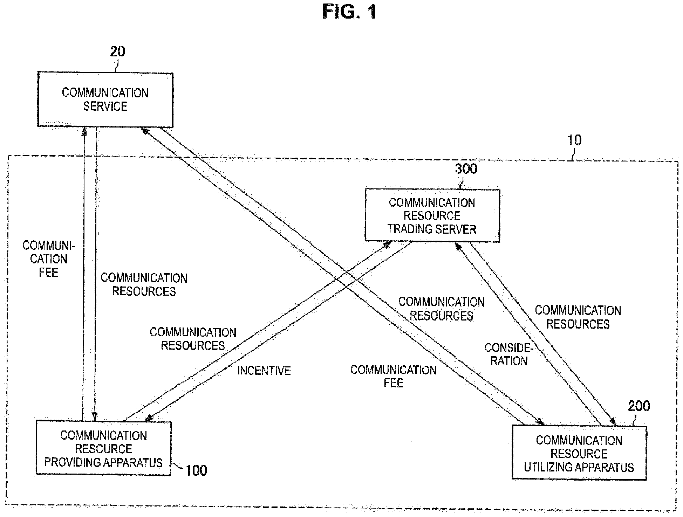

FIG. 1 is an explanatory diagram illustrating a configuration example of a communication resource trading system 10 according to an embodiment of the present disclosure. The configuration example of the communication resource trading system 10 according to an embodiment of the present disclosure will be described in detail below using FIG. 1.

As illustrated in FIG. 1, the communication resource trading system 10 according to an embodiment of the present disclosure is configured to include a communication resource providing apparatus 100, a communication resource utilizing apparatus 200 and a communication resource trading server 300.

The communication resource providing apparatus 100 is an apparatus which provides at least part of radio communication resources which can be utilized by the communication resource providing apparatus 100 to the communication resource trading server 300. The communication resource providing apparatus 100 acquires from the communication resource trading server 300 a predetermined incentive (reward) in return for providing at least part of radio communication resources which can be utilized by the communication resource providing apparatus 100 to the communication resource trading server 300. The communication resource providing apparatus 100, for example, provides at least part of radio communication resources for Internet connection provided by communication service 20, to the communication resource trading server 300. The radio communication resources for Internet connection provided by the communication service 20 can include communication band and a communication amount. Note that it is not necessary that the communication resource providing apparatus 100 itself can utilize Internet connection provided by the communication service 20, and it is only necessary that another apparatus which can be controlled from the communication resource providing apparatus 100 can utilize Internet connection provided by the communication service 20.

Note that the communication service 20 may be service which provides Internet connection using a leased line, an optical line, an asymmetric digital subscriber line (ADLS), or the like, or may be service which provides Internet connection using wide area radio communication such as LTE.

The communication resource providing apparatus 100 provides Internet connection using, for example, an optical line which can be utilized by the communication resource providing apparatus 100 or wide area radio communication such as long term evolution (LTE) to the communication resource trading server 300 as radio communication resources. Further, the communication resource providing apparatus 100 may utilize predetermined service for free or at a discount as well as receive money in return for providing communication resources. For example, the communication resource providing apparatus 100 can place an advertisement to service provided by the communication resource trading server 300 for free or at a discount or can obtain an item which can be used in service provided by the communication resource trading server 300 in return for providing radio communication resources.

The communication resource utilizing apparatus 200 is an apparatus which receives provision of radio communication resources for Internet connection provided by the communication service 20, from the communication resource trading server 300 and performs radio communication using radio communication resources including the radio communication resources. The communication resource utilizing apparatus 200 is, for example, a smartphone, a tablet terminal, a personal computer, mobile game machine, a mobile music player, or the like.

When the communication resource utilizing apparatus 200 receives provision of the radio communication resources from the communication resource trading server 300, the communication resource utilizing apparatus 200 bears a predetermined burden for the provision as necessary. For example, when the communication resource utilizing apparatus 200 receives provision of radio communication resources from the communication resource trading server 300, the communication resource utilizing apparatus 200 pays a consideration for the provision, has a duty to display a predetermined advertisement from the service provided by the communication resource trading server 300, or provides an item which can be used in the service provided by the communication resource trading server 300.

The communication resource trading server 300 is a server for trading radio communication resources for Internet connection provided by the communication service 20. The communication resource trading server 300 manages radio communication resources provided by the communication resource providing apparatus 100, and provides the managed communication resources to the communication resource utilizing apparatus 200 in response to a request from the communication resource utilizing apparatus 200.

When the communication resource trading server 300 receives provision of radio communication resources from the communication resource providing apparatus 100, the communication resource trading server 300 provides a return for the provision to the communication resource providing apparatus 100, and, when the communication resource trading server 300 receives a request for radio communication resources from the communication resource utilizing apparatus 200, the communication resource trading server 300 places a predetermined burden on the communication resource utilizing apparatus 200 in return for the request.

As a result of the communication resource trading system 10 according to an embodiment of the present disclosure having a configuration as illustrated in FIG. 1, it is possible to provide radio communication resources allocated to be used by the communication resource providing apparatus 100 to the communication resource utilizing apparatus 200 from the communication resource trading server 300 in response to a request from the communication resource utilizing apparatus 200.

Further, as a result of the communication resource trading system 10 according to an embodiment of the present disclosure having a configuration as illustrated in FIG. 1, it is possible to provide a reward in accordance with an amount of radio communication resources provided to the communication resource utilizing apparatus 200 to the communication resource providing apparatus 100 which is a provider of the radio communication resources from the communication resource trading server 300. As a result of the communication resource trading system 10 according to an embodiment of the present disclosure having a configuration as illustrated in FIG. 1, it is possible to share radio communication resources among users while flexibly reflecting intention of users to utilize radio communication resources.

Note that, while, in the system configuration example illustrated in FIG. 1, the communication resource providing apparatus 100 and the communication resource utilizing apparatus 200 are separately illustrated, an identical apparatus can be a provider of radio communication resources on one occasion and can be a user which receives provision of radio communication resources on another occasion. That is, on one occasion, the communication resource providing apparatus 100 can be an apparatus which receives provision of radio communication resources, and the communication resource utilizing apparatus 200 can be an apparatus which provides radio communication resources.

The configuration example of the communication resource trading system 10 according to an embodiment of the present disclosure has been described above using FIG. 1. Subsequently, functional configuration examples of respective apparatuses which constitute the communication resource trading system 10 according to an embodiment of the present disclosure will be described using FIG. 1.

### [1.2.2. Functional configuration example of communication resource providing apparatus]

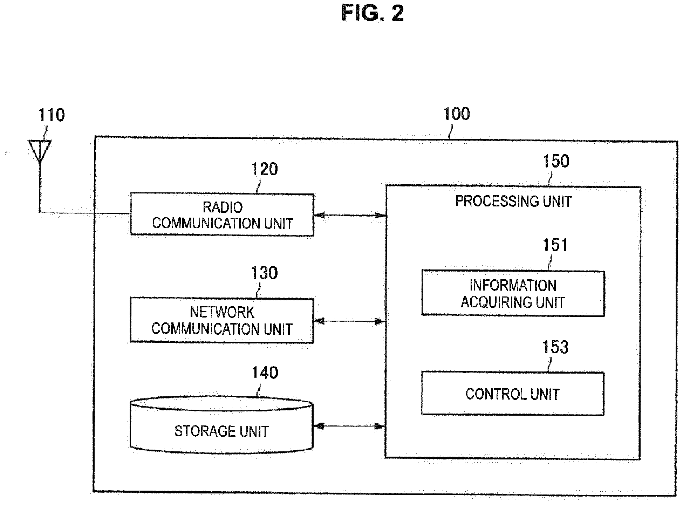

First, a functional configuration example of the communication resource providing apparatus 100 constituting the communication resource trading system 10 according to an embodiment of the present disclosure will be described. FIG. 2 is an explanatory diagram illustrating the functional configuration example of the communication resource providing apparatus 10 constituting the communication resource trading system 10 according to an embodiment of the present disclosure. The functional configuration example of the communication resource providing apparatus will be described below using FIG. 2.

As illustrated in FIG. 2, the communication resource providing apparatus 100 according to an embodiment of the present disclosure includes an antenna unit 110, a radio communication unit 120, a network communication unit 130, a storage unit 140 and a processing unit 150.

### (Antenna unit 110)

The antenna unit 110 radiates a signal output from the radio communication unit 120 to space as a radio wave. Further, the antenna unit 110 converts a radio wave in space into a signal and outputs the signal to the radio communication unit 120.

### (Radio communication unit 120)

The radio communication unit 120 wirelessly transmits/receives signals. The radio communication unit 120 performs radio communication with other apparatuses, for example, the communication resource utilizing apparatus 200, and radio communication with a base station in the case where the communication service 20 is service which provides Internet connection using wide area radio communication such as LTE. Further, the radio communication unit 120 can directly or indirectly perform radio communication with the communication resource utilizing apparatus 200 which receives provision of radio communication resources.

### (Network communication unit 130)

The network communication unit 130 transmits/receives information in a wired or wireless manner. For example, the network communication unit 130 transmits/receives information using Internet connection service provided by the communication service 20.

### (Storage unit 140)

The storage unit 140 temporarily or permanently stores a program and data for operation of the communication resource providing apparatus 100. In the present embodiment, the storage unit 140 stores cache data to be referred to by the communication resource providing apparatus 100, application and data to be used by application. The program and data stored in the storage unit 140 is read out by the control unit 153 as needed.

### (Processing unit 150)

The processing unit 150 provides various functions of the communication resource providing apparatus 100. The processing unit 150 includes an information acquiring unit 151 and a control unit 153. Note that the processing unit 150 can further include components other than these components. That is, the processing unit 150 can perform operation other than operation of these components.

### (Information acquiring unit 151)

The information acquiring unit 151 acquires information and a program for operation of the communication resource providing apparatus 100 and information received from other nodes. The information acquiring unit 151 can acquire information and a program for operation of the communication resource providing apparatus 100 from the storage unit 140.

In the present embodiment, the information acquiring unit 151 acquires a reward regarding service performed at the communication resource trading server 300 from the communication resource trading server 300 as a reward for providing radio communication resources to the communication resource trading server 300. The information acquiring unit 151 can acquire a reward in accordance with an amount of radio communication resources provided to the communication resource trading server 300 from the communication resource trading server 300. The service performed at the communication resource trading server 300 and an example of the reward regarding the service will be described later. In the following description, if not otherwise specified, the information acquiring unit 151 acquires various rewards regarding the service performed at the communication resource trading server 300.

### (Control unit 153)

The control unit 153 controls operation of the communication resource providing apparatus 100. In the present embodiment, the control unit 153 performs processing of providing radio communication resources allocated to a user of the communication resource providing apparatus 100 to another user in response to a request from the another user. The control unit 153 can dynamically change allocation of radio communication resources (a bandwidth or a communication amount) to another user in accordance with circumstances.

When the control unit 153 provides radio communication resources, the control unit 153 transmits, for example, a type of radio communication which can be provided, information of a communication amount and communication band which can be provided, or the like, to the communication resource trading server 300. The type of radio communication which can be provided includes, for example, radio communication using Wi-Fi, and radio communication using a cellular system. In the following description, if not otherwise specified, the control unit 153 executes various kinds of processing relating to provision of radio communication resources.

The functional configuration example of the communication resource providing apparatus 100 has been described above using FIG. 2. Subsequently, a functional configuration example of the communication resource utilizing apparatus 200 which constitutes the communication resource trading system 10 according to an embodiment of the present disclosure will be described.

### [1.2.3. Functional configuration example of communication resource utilizing apparatus]

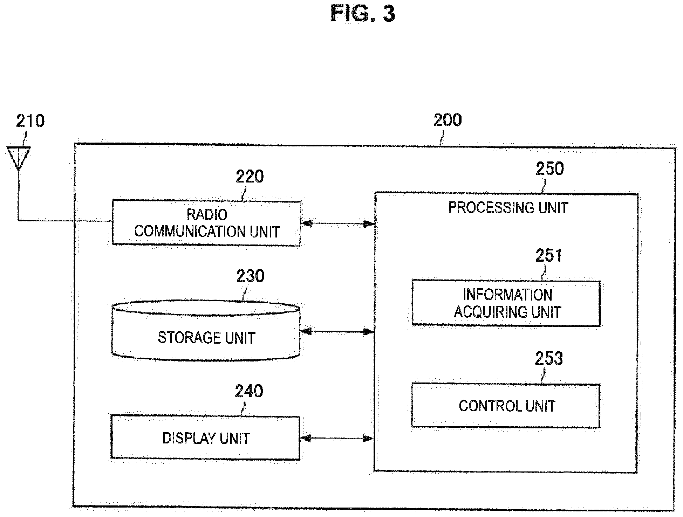

FIG. 3 is an explanatory diagram illustrating a functional configuration example of the communication resource utilizing apparatus 200 constituting the communication resource trading system 10 according to an embodiment of the present disclosure. The functional configuration example of the communication resource utilizing apparatus 200 will be described below using FIG. 3.

As illustrated in FIG. 3, the communication resource utilizing apparatus 200 includes an antenna unit 210, a radio communication unit 220, a storage unit 230, a display unit 240 and a processing unit 250.

### (Antenna unit 210)

The antenna unit 210 radiates a signal output from the radio communication unit 220 to space as a radio wave. Further, the antenna unit 210 converts a radio wave in space into a signal and outputs the signal to the radio communication unit 220.

### (Radio communication unit 220)

The radio communication unit 220 transmits/receives signals. For example, the radio communication unit 220 performs radio communication with a base station in the case where the communication service 20 is service which provides Internet connection using wide area radio communication such as LTE. Further, the radio communication unit 220 can directly or indirectly perform radio communication with the communication resource providing apparatus 100 which provides radio communication resources.

### (Storage unit 230)

The storage unit 230 temporarily or permanently stores a program and data for operation of the communication resource utilizing apparatus 200. In the present embodiment, the storage unit 230 stores, for example, a program of application running on the communication resource utilizing apparatus 200. The program and data stored in the storage unit 230 are read out by the control unit 253 which will be described later as needed.

### (Display unit 240)

The display unit 240 displays characters, images and other information on the basis of control by the control unit 253 which will be described later. The display unit 240 is formed with a liquid crystal display, an organic EL display or other display devices. Further, a touch panel which enables a user to perform manipulation by touching a screen may be provided at the display unit 240.

### (Processing unit 250)

The processing unit 250 provides various functions of the communication resource utilizing apparatus 200. The processing unit 250 includes an information acquiring unit 251 and a control unit 253. Note that the processing unit 250 can further include components other than these components. That is, the processing unit 250 can perform operation other than operation of these components.

### (Information acquiring unit 251)

The information acquiring unit 251 acquires various kinds of information from a signal obtained from a radio wave received by the antenna unit 210. Further, the information acquiring unit 251 can acquire information or a program for operation of the communication resource utilizing apparatus 200 from the storage unit 230. In the present embodiment, the information acquiring unit 251 acquires information regarding radio communication resources provided by the communication resource providing apparatus 100 from the communication resource trading server 300. The information regarding the radio communication resources acquired by the information acquiring unit 251 can be used for processing by the control unit 253.

### (Control unit 253)

The control unit 253 controls operation of the communication resource utilizing apparatus 200. In the present embodiment, the control unit 253 performs processing of requesting radio communication resources allocated to another user, for example, the communication resource providing apparatus 100, to the communication resource trading server 300. Further, the control unit 253 performs processing of bearing a predetermined burden regrading service of application which uses the radio communication resources in return for utilizing the radio communication resources allocated to another user, for example, the communication resource providing apparatus 100.

When the control unit 253 requests radio communication resources to the communication resource trading server 300, the control unit 253 transmits, for example, a required communication amount and communication band of radio communication, information of a type of radio communication to be utilized, or the like, to the communication resource trading server 300. The type of radio communication to be utilized includes, for example, radio communication using Wi-Fi and radio communication using a cellular system. In the following description, if not otherwise specified, the control unit 253 executes various kinds of processing regarding utilization of radio communication resources to be provided.

The functional configuration example of the communication resource utilizing apparatus 200 has been described above using FIG. 3. Subsequently, a functional configuration example of the communication resource trading server 300 constituting the communication resource trading system 10 according to an embodiment of the present disclosure will be described.

### [1.2.4. Functional configuration example of communication resource trading server]

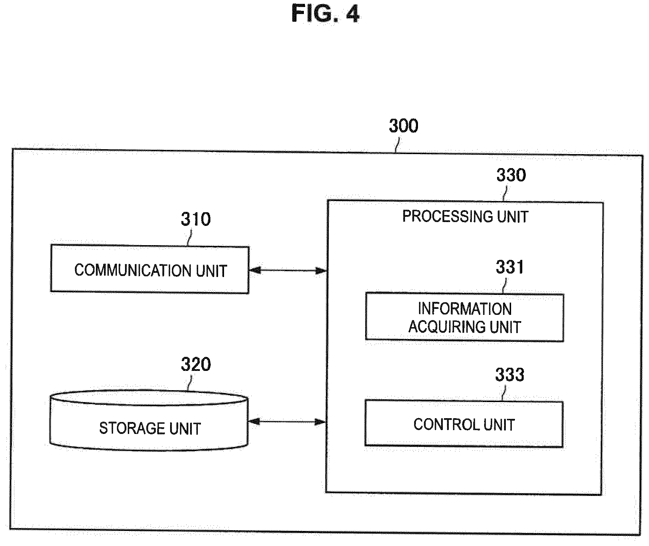

FIG. 4 is an explanatory diagram illustrating a functional configuration example of the communication resource trading server 300 constituting the communication resource trading system 10 according to an embodiment of the present disclosure. The functional configuration example of the communication resource trading server 300 will be described below using FIG. 4.

As illustrated in FIG. 4, the communication resource trading server 300 includes a communication unit 310, a storage unit 320 and a processing unit 330.

### (Communication unit 310)

The communication unit 310 transmits/receives information. For example, the communication unit 310 transmits information to other nodes, for example, the communication resource providing apparatus 100 and the communication resource utilizing apparatus 200 and receives information from other nodes.

### (Storage unit 320)

The storage unit 320 temporarily or permanently stores a program and data for operation of the communication resource trading server 300. For example, the storage unit 320 temporarily or permanently stores information acquired by the information acquiring unit 331. The storage unit 320 can store data to be used by the control unit 333 for various kinds of control.

### (Processing unit 330)

The processing unit 330 provides various functions of the communication resource trading server 300. The processing unit 330 includes an information acquiring unit 331 and a control unit 333. Note that the processing unit 330 can further include components other than these components. That is, the processing unit 330 can perform operation other than operation of these components.

### (Information acquiring unit 331)

The information acquiring unit 331 acquires information for operation of the communication resource trading server 300 and information received from other nodes. The information acquiring unit 331 can acquire information and a program for operation of the communication resource trading server 300 from the storage unit 320.

### (Control unit 333)

The control unit 333 controls operation of the communication resource trading server 300. The control unit 333 can operate on the basis of the information acquired by the information acquiring unit 331. In the present embodiment, the control unit 333 allocates radio communication resources allocated to the communication resource providing apparatus 100 to the communication resource utilizing apparatus 200 in response to a request from the communication resource utilizing apparatus 200 and provides a reward in accordance with an amount of the radio communication resources allocated to the communication resource utilizing apparatus 200, to the communication resource providing apparatus 100. The control unit 333 may change a reward to be provided to the communication resource providing apparatus 100 in accordance with an amount of radio communication resources which can be allocated to the communication resource utilizing apparatus 200.

When the control unit 333 receives a request for radio communication resources from the communication resource utilizing apparatus 200, the control unit 333 judges whether radio communication resources sufficient to respond to the request are provided from the communication resource providing apparatus 100. If radio communication resources sufficient to respond to the request from the communication resource utilizing apparatus 200 are provided from the communication resource providing apparatus 100, the control unit 333 provides radio communication resources responding to the request to the communication resource utilizing apparatus 200. On the other hand, if radio communication resources sufficient to respond to the request from the communication resource utilizing apparatus 200 are not provided from the communication resource providing apparatus 100, the control unit 333 notifies the communication resource utilizing apparatus 200 that radio communication resources cannot be provided or notifies the communication resource utilizing apparatus 200 that only part of radio communication resources can be provided. In the following description, if not otherwise provided, the control unit 333 executes various kinds of processing regarding accommodation of radio communication resources.

The functional configuration example of the communication resource trading server 300 has been described above using FIG. 4.

### [1.3. Operation example]

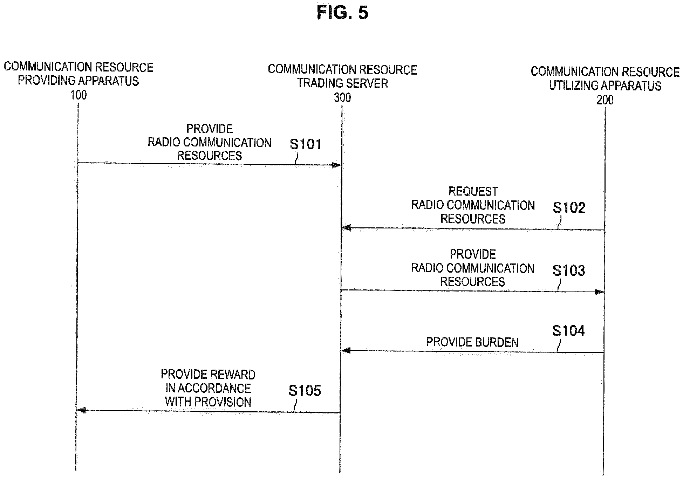

Subsequently, an operation example of the communication resource trading system 10 according to an embodiment of the present disclosure will be described. FIG. 5 is a sequence diagram illustrating an operation example of a communication resource trading system 10 according to an embodiment of the present disclosure. The operation example of the communication resource trading system 10 according to an embodiment of the present disclosure will be described below using FIG. 5.

The communication resource providing apparatus 100 which can provide radio communication resources provide radio communication resources to the communication resource trading server 300 (step S101). The processing of step S101 is executed by, for example, the control unit 153. When the communication resource providing apparatus 100 provides radio communication resources in step S101, the communication resource providing apparatus 100 transmits, for example, a type of radio communication which can be provided, information of a communication amount and communication band which can be provided, or the like, to the communication resource trading server 300. The type of radio communication which can be provided includes, for example, radio communication using Wi-Fi and radio communication using a cellular system.

Further, the communication resource utilizing apparatus 200 which desires to receive provision of radio communication resources requests radio communication resources to the communication resource trading server 300 (step SI02). The processing of step S102 is executed by, for example, the control unit 253. When the communication resource utilizing apparatus 200 requests radio communication resources, the communication resource utilizing apparatus 200 transmits, for example, a required communication amount and communication band of radio communication, information of a type of radio communication to be utilized, or the like, to the communication resource trading server 300. The type of radio communication to be utilized includes, for example, radio communication using Wi-Fi and radio communication using a cellular system.

The communication resource trading server 300 which receives the request for radio communication resources from the communication resource utilizing apparatus 200 judges whether radio communication resources sufficient to respond to the request are provided from the communication resource providing apparatus 100.

If radio communication resources sufficient to respond to the request from the communication resource utilizing apparatus 200 are provided from the communication resource providing apparatus 100, the communication resource trading server 300 provides radio communication resources responding to the request to the communication resource utilizing apparatus 200.

On the other hand, if radio communication resources sufficient to respond to the request from the communication resource utilizing apparatus 200 are not provided from the communication resource providing apparatus 100, the communication resource trading server 300 notifies the communication resource utilizing apparatus 200 that radio communication resources cannot be provided or notifies the communication resource utilizing apparatus 200 that only part of radio communication resources can be provided.

In the flowchart in FIG. 5, radio communication resources sufficient to respond to the request from the communication resource utilizing apparatus 200 are provided from the communication resource providing apparatus 100, and the communication resource trading server 300 provides radio communication resources responding to the request to the communication resource utilizing apparatus 200 (step S103). The processing of step S103 is executed by, for example, the control unit 333.

When the communication resource trading server 300 provides radio communication resources responding to the request to the communication resource utilizing apparatus 200, the communication resource trading server 300 may notify the communication resource utilizing apparatus 200 of information of a burden to be beard by the communication resource utilizing apparatus 200 to utilize the radio communication resources. The communication resource utilizing apparatus 200 makes the user judge whether to bear the burden, and, if the user agrees to bear the burden, the communication resource utilizing apparatus 200 may receive provision of the radio communication resources from the communication resource trading server 300 on condition that the burden is provided (step S104). A specific example of the burden will be described in detail later.

When the communication resource trading server 300 provides radio communication resources to the communication resource utilizing apparatus 200, the communication resource trading server 300 provides a reward in accordance with an amount of the provided radio communication resources to the communication resource providing apparatus 100 which provides the radio communication resources (step S105). The processing of step S105 is executed by, for example, the control unit 333.

Note that the communication resource trading server 300 may provide a reward to the communication resource providing apparatus 100 at a time point when the communication resource providing apparatus 100 provides radio communication resources in the above-described step S101.

In the communication resource trading system 10 according to an embodiment of the present disclosure, by a series of operation as illustrated in FIG. 5 being executed, it is possible to provide radio communication resources allocated to be used by the communication resource providing apparatus 100 to the communication resource utilizing apparatus 200 from the communication resource trading server 300 in response to a request from the communication resource utilizing apparatus 200.

Further, in the communication resource trading system 10 according to an embodiment of the present disclosure, by a series of operation as illustrated in FIG. 5 being executed, it is possible to provide a reward in accordance with an amount of radio communication resources provided to the communication resource utilizing apparatus 200 from the communication resource trading server 300 to the communication resource providing apparatus 100 which is a provider of the radio communication resources. In the communication resource trading system 10 according to an embodiment of the present disclosure, by a series of operation as illustrated in FIG. 5 being executed, it is possible to share radio communication resources among users while flexibly reflecting intention of users to utilize radio communication resources.

The operation example of the communication resource trading system 10 according to an embodiment of the present disclosure has been described above. Subsequently, embodiments of the communication resource trading system 10 according to an embodiment of the present disclosure will be described.

### [1.4. Embodiments]

### (Embodiment 1: game service to which advertisement platform is applied)

First, an example of game service to which an advertisement platform is applied will be described as an embodiment of the communication resource trading system 10 according to an embodiment of the present disclosure.

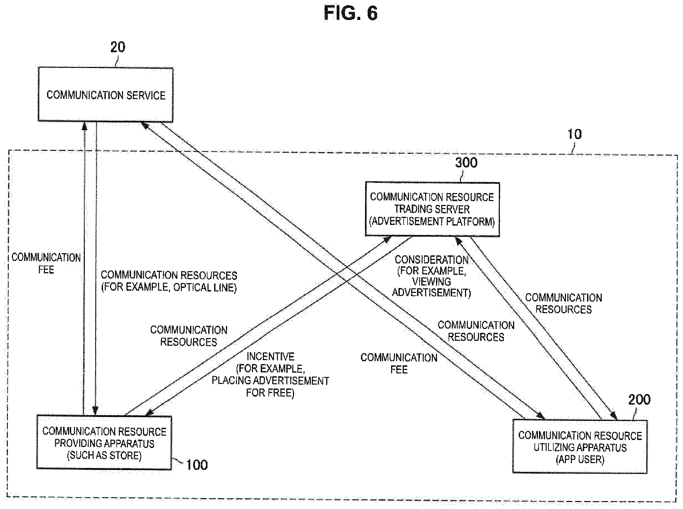

FIG. 6 is an explanatory diagram illustrating an embodiment of the communication resource trading system 10 according to an embodiment of the present disclosure. In Embodiment 1, the communication resource trading server 300 provides advertisement providing service and game service through application (hereinafter, also simply referred to as "app"). The communication resource providing apparatus 100 is, for example, an apparatus which is located at a store which subscribes to the communication service 20 in a city, and the communication resource utilizing apparatus 200 is, for example, an apparatus used by a user who utilizes game service.

In the present embodiment, the communication resource trading server 300 provides communication resource trading service for accommodating other apparatuses with radio communication resources for utilizing the communication service 20 to which the communication resource providing apparatus 100 subscribes. Further, the communication resource trading server 300 enables the communication resource providing apparatus 100 to place an advertisement on the game service for free or at low cost in return for providing communication resources.

At the store in the city, Internet connection service such as an optical line can be utilized, and the store holds facility for a short-distance radio communication line (such as a Wi-Fi access point) with which the Internet connection service can be utilized. If the store subscribes to communication resource trading service by the communication resource trading server 300, the store provides the communication resource trading service with Internet connection via the short-distance radio communication line of the store in return for placing an advertisement of the store for free or at low cost.

A general user who uses game service holds the communication resource utilizing apparatus 200 which supports both wide area radio communication such as LTE and short-distance radio communication such as Wi-Fi. In this case, the communication resource utilizing apparatus 200 can be, for example, a smartphone, a tablet terminal, or the like.

When the above-described general user utilizes game service which is provided by the communication resource trading server 300 along with the communication resource trading service, the general user can utilize off-load communication utilizing short-distance radio communication such as Wi-Fi for free in the vicinity of a store which subscribes to the communication resource trading service.

Note that, in the case where short-distance radio communication such as Wi-Fi of the store is utilized, an advertisement of the store in the city is displayed on a game, or advertisements of stores in the vicinity are frequently displayed at the communication resource utilizing apparatus 200. Further, the communication resource trading server 300 may cause bias in the number of times of display of advertisements displayed at the communication resource utilizing apparatus 200 in accordance with quality or a maximum communication amount of a communication line provided by the communication resource providing apparatus 100. Further, if the user of the communication resource utilizing apparatus 200 pays a predetermined consideration to the communication resource trading service by the communication resource trading server 300, the communication resource trading server 300 may stop output of advertisements to the communication resource utilizing apparatus 200.

The communication resource providing apparatus 100 registers, for example, a position of the store, an ID, a password, throughput, a maximum communication amount of an access point, or the like, in the communication resource trading server 300. When the communication resource utilizing apparatus 200 detects that there is a store in the vicinity through a GPS, or the like, during execution of game app, the communication resource utilizing apparatus 200 downloads an ID and a password of an access point of the store to search for the access point and is connected to the access point.

When the communication resource utilizing apparatus 200 is connected to the access point of the store, the communication resource trading server 300 determines advertisements to be displayed at the communication resource utilizing apparatus 200 from a position of the communication resource utilizing apparatus 200, or the like, and delivers the advertisements to the communication resource utilizing apparatus 200. Note that the advertisements delivered to the communication resource utilizing apparatus 200 can be displayed upon start of the game, during waiting time of the game, at part of a game screen, or the like.

The communication resource utilizing apparatus 200 may be able to perform direct communication (communication using a mesh network, or the like) between equipment using Bluetooth (registered trademark), or the like. The communication resource utilizing apparatus 200 may enable a direct communication function upon utilization of the game service to link with apparatuses of other users who are in the vicinity of the communication resource utilizing apparatus 200 and who utilize the same game. As a result of the communication resource utilizing apparatus 200 being linked with the apparatuses of other users who use the same game, a network among the apparatuses is formed. The network among the apparatuses may be used as a function of a game itself such as so-called street pass communication.

In the case where one of the apparatuses which utilize the same game can be connected to Internet connection service provided by a store in the city, all the apparatuses in the network among the apparatuses off-load connection to the Internet connection service of the store. As a result of all the apparatuses in the network among the apparatuses off-loading connection to the Internet connection service of the store, it is possible to provide an effect of broadening a range in which connection can be off-loaded.

As a modified example of Embodiment 1, for example, advertisements from the communication service 20 or another advertisement distributor as well as advertisements from the communication resource providing apparatus 100, may be delivered from the communication resource providing apparatus 100 to the communication resource utilizing apparatus 200. As an example, the communication resource providing apparatus 100 may provide app for allowing utilization of radio communication resources of the communication resource providing apparatus 100 to the communication resource utilizing apparatus 200 and may deliver advertisements from the communication resource providing apparatus 100 or advertisements from the communication service 20, or the like, through the app while the communication resource utilizing apparatus 200 uses the app.

### (Embodiment 2: game service utilizing communication service using LTE)

An example of game service which utilizes communication service using LTE will be described as an embodiment of the communication resource trading system 10 according to an embodiment of the present disclosure.

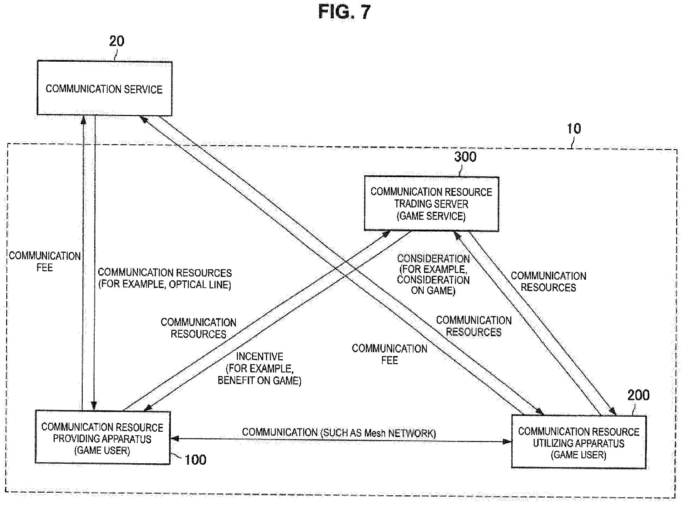

FIG. 7 is an explanatory diagram illustrating an embodiment of the communication resource trading system 10 according to an embodiment of the present disclosure. In Embodiment 2, the communication resource trading server 300 provides game service through app. The communication resource providing apparatus 100 is, for example, an apparatus which has a communication amount sufficient to be used for Internet connection service provided by the communication service 20, and which is used by a user who utilizes the game service. The communication resource utilizing apparatus 200 is, for example, an apparatus used by the user who utilizes the game service.

In the present embodiment, the communication resource trading server 300 provides communication resource trading service which accommodates other apparatuses with radio communication resources for utilizing the communication service 20 to which the communication resource providing apparatus 100 subscribes. Further, the communication resource trading server 300 provides a benefit such as an item which can be used on the game service, or the like, to the communication resource providing apparatus 100 in return for providing communication resources.

A general user who uses game service holds the communication resource providing apparatus 100 and the communication resource utilizing apparatus 200 which support both wide area radio communication such as LTE and short-distance radio communication such as Wi-Fi. In this case, the communication resource utilizing apparatus 200 can be, for example, a smartphone, a tablet terminal, or the like.

The above-described general user can provide communication resource trading service with a communication amount which can be used in communication to which the general user subscribes when the general user utilizes game service which is provided by the communication resource trading server 300 along with the communication resource trading service. By the communication amount which can be used being provided to the communication resource trading service, the above-described general user can obtain a benefit such as an item which can be used on the service.

An apparatus used by the general user who uses the game service (the communication resource providing apparatus 100 or the communication resource utilizing apparatus 200) may be linked with apparatuses of other users who are located in the vicinity and who utilize the same game through direct short-distance radio communication (communication using a mesh network, or the like) among equipment using Bluetooth (registered trademark) while the general user uses the game service with app. As a result of the apparatus used by the general user being linked with the apparatuses of other users who utilize the same game, a network among the apparatuses is formed. This network among the apparatuses may be used as a function of a game itself such as so-called street pass communication.

When the general user who uses the game service using the communication resource utilizing apparatus 200 utilizes the game service provided by the communication resource trading service, in the case where one of apparatuses forming the above-described network among the apparatuses becomes the communication resource providing apparatus 100 and provides a communication amount which can be used in an LTE line, or the like, to which the general user subscribes, to the communication resource trading service, the general user can perform Internet connection by utilizing the LTE line, or the like, via the above-described network among the apparatuses up to upper limit of the provided communication amount. The communication resource utilizing apparatus 200 can suppress a communication amount of communication to which the general user subscribes by using radio communication resources provided by the communication resource providing apparatus 100.

A person who can use the radio communication resources provided by the communication resource providing apparatus 100 may be limited to, for example, a user who pays a consideration in the game service (such as a person who consumes points obtained in accordance with activity within the game and a person who consumes a special item).

In the present embodiment, when the communication resource providing apparatus 100 provides radio communication resources, a rule in which an item which can be used in the game service can be provided to the communication resource providing apparatus 100 as a reward for the provision may be provided on the game. For example, when the communication resource providing apparatus 100 provides radio communication resources corresponding to 1 GB, the communication resource providing apparatus 100 may get a recovery item which can be used in the game service.

When the communication resource providing apparatus 100 executes app and displays a screen of the game, and the user performs manipulation so as to provide radio communication resources, the communication resource providing apparatus 100 transmits information identifying the user (for example, a user ID) and a communication amount to be provided to the communication resource trading server 300. When the information identifying the user and the communication amount to be provided by the user are transmitted from the communication resource providing apparatus 100, the communication resource trading server 300 records the communication amount which can be provided by the user.

For example, if one user further provides radio communication resources corresponding to 2 GB in a state where the user has already provided radio communication resources corresponding to 1 GB, the communication resource trading server 300 records that the user provides radio communication resources corresponding to 3 GB.

Further, the communication resource trading server 300 records an amount of provided communication amount for each user.

While the communication resource trading server 300 may provide radio communication resources in response to a request from the communication resource utilizing apparatus 200, the communication resource trading server 300 may automatically provide radio communication resources to the communication resource utilizing apparatus 200 in accordance with radio communication resources which can be used.

For example, in the case where a user A whose communication amount which can be provided is more than zero and another user B exist on the same mesh network, the communication resource trading server 300 may allocate part or all of the communication amount which can be provided to the user B. Of course, the communication amount which can be provided of the user A is reduced by an amount allocated to the user B. A communication amount of the user B to whom the communication amount is allocated increases by the provided communication amount.

The communication resource trading server 300 records information as to from which user communication resources are provided, along with the provided communication amount. In this case, the communication resource trading server 300 records an ID of the user A on the mesh network along with the provided communication amount of the user B.

An apparatus of the user B (the communication resource utilizing apparatus 200) whose provided communication amount is more than zero performs communication using radio communication resources allocated from the communication resource trading server 300 instead of using an LTE line to which the user B subscribes upon next communication. Specifically, the apparatus of the user B performs routing by utilizing an ID of the user A who is a providing source on the mesh network and requests reception to the user A who is the providing source while designating a connection destination on the Internet.

The apparatus of the user A who is the providing source receives data from the designated connection destination on the Internet in accordance with the request from the apparatus of the user B and transfers the received data to a terminal of the user B.

Note that, in the case where a size of data received from the connection destination on the Internet designated from the apparatus of the user B exceeds the provided communication amount of the user B, for example, it is also possible to employ a model in which only statistics are kept without performing any operation, and a communication amount is cancelled out with a communication amount lent or borrowed in the future or employ a model in which communication is terminated each time.

An incentive in the game service provided by the communication resource trading server 300 can be obtained by the user providing radio communication resources. This incentive includes, for example, points obtained on the game, acquisition of currency, increase in an acquisition rate, acquisition of a new character or item or increase in an acquisition rate, improvement in performance of a character or item or increase in a performance improvement rate, acquisition of an opportunity for participating in an event on the game or increase in an acquisition rate of the opportunity, hiding of advertisements on the game, or the like. Of course, there may be no incentive in the game service. In the case where there is no incentive in the game service, right to play the game itself can be an incentive.

A consideration paid in the game service provided by the communication resource trading server 300 is provided to the game service in the case where the user requests radio communication resources. The consideration includes, for example, points and currency obtained on the game, an item, assessment and advertisements of the game in social networking service (SNS) or an application store, actual money, display of advertisements on the game, or the like. Of course, there may be no consideration in the game service. In the case where there is no consideration in the game service, accommodating other apparatuses with radio communication resources, which is the basic service of the game, can be a consideration.

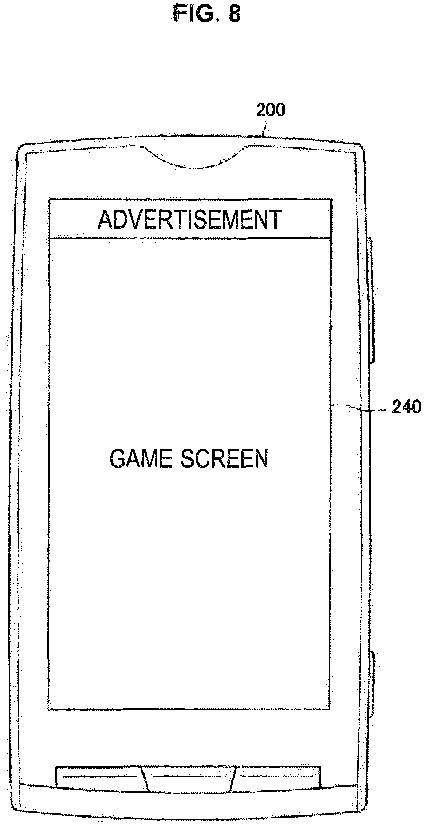

FIG. 8 is an explanatory diagram illustrating an aspect where information is displayed at the display unit 240 of the communication resource utilizing apparatus 200. FIG. 8 illustrates an example in the case where the communication resource utilizing apparatus 200 which receives provision of radio communication resources displays an advertisement at the display unit 240 which displays a game screen. FIG. 8 illustrates an aspect where an advertisement is displayed at an upper part of the game screen. Of course, a position of the advertisement is not limited to the upper part of the game screen.

The communication resource providing apparatus 100 which provides radio communication resources may determine policy as to acceptance or denial of an incentive or utilization of provided radio communication resources by other users in advance. The policy can be set in accordance with a state of the radio communication resources allocated to the own user. Further, for example, the policy can include constantly permitting provision, permitting provision only upon Wi-Fi connection, constantly denying provision, or the like. Further, the communication resource providing apparatus 100 which provides radio communication resources may judge whether or not to permit provision on the basis of a request for acceptance or denial of an incentive.

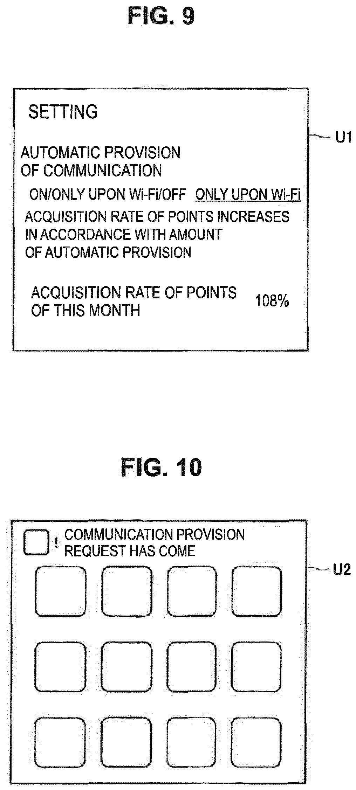

FIG. 9 is an explanatory diagram illustrating an example of a user interface displayed at the communication resource providing apparatus 100 which provides radio communication resources. A user interface U1 illustrated in FIG. 9 is a user interface for allowing the user to determine policy as to acceptance or denial of an incentive. Note that, at the user interface U1 illustrated in FIG. 9, an acquisition rate of points of this month in game service is displayed along with the policy. The acquisition rate of points may increase in accordance with an amount of radio communication resources which are automatically provided.

FIG. 10 is an explanatory diagram illustrating an example of a user interface displayed at the communication resource providing apparatus 100 which provides radio communication resources. A user interface U2 illustrated in FIG. 10 is a user interface for notifying the user that there is a request for provision of radio communication resources. The user of the communication resource providing apparatus 100 can determine whether to provide radio communication resources by viewing the user interface U2 displayed as illustrated in FIG. 10.

As a modified example of Embodiment 2, it is also possible to employ a configuration where, for example, only the communication resource providing apparatus 100 which provides radio communication resources can obtain a reward of capable of uploading data regarding the game service provided by the communication resource trading server 300 to the communication resource trading server 300.

### (Embodiment 3: radio communication service with advertisements)

An example of radio communication service with advertisements will be described as an embodiment of the communication resource trading system 10 according to an embodiment of the present disclosure.

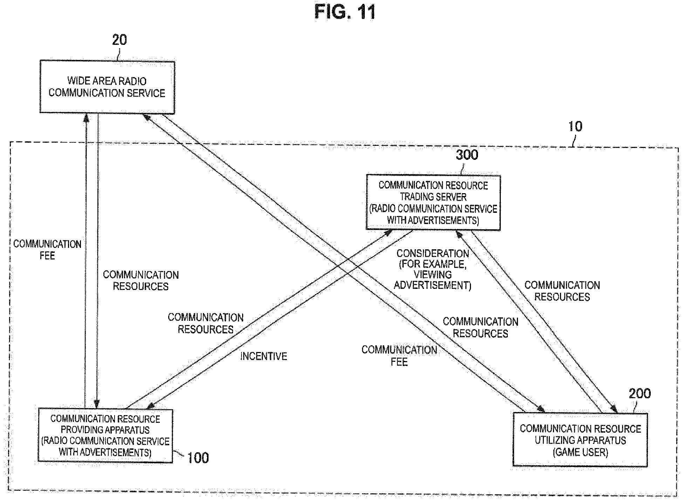

FIG. 11 is an explanatory diagram illustrating an embodiment of the communication resource trading system 10 according to an embodiment of the present disclosure. In Embodiment 3, the communication resource providing apparatus 100 and the communication resource trading server 300 provide radio communication service with advertisements. The communication resource utilizing apparatus 200 is an apparatus used by the user who utilizes this radio communication service with advertisements.

For example, a mobile network operator (MNO) or a mobile virtual network operator (MVNO) which borrows and operates a line from the mobile network operator can provide radio communication service with advertisements. The communication resource providing apparatus 100 which provides radio communication resources can be also the above-described MNO or MVNO. A provider of the radio communication service with advertisements displays advertisements to the user in return for providing radio communication resources.

In this embodiment, a provider of radio communication service with advertisements (a user who provides radio communication resources) provides Internet connection service for free or at lower cost to a user member who is a customer. The user of the communication resource utilizing apparatus 200 who utilizes the radio communication resources provided by the radio communication service with advertisements performs Internet connection with the communication resource utilizing apparatus 200 using the provided radio communication resources. In this embodiment, the communication resource utilizing apparatus 200 is an apparatus which can perform connection using LTE, 3G, Wi-Fi, Bluetooth or other radio communication.

The communication resource utilizing apparatus 200 which utilizes radio communication resources receives advertisements presented from the provider of the radio communication service with advertisements (the user who provides the radio communication resources) from the communication resource trading server 300 in return for receiving provision of Internet connection at a price on favorable conditions. The communication resource utilizing apparatus 200 can connect to the Internet using a communication line provided by the radio communication service with advertisements by approving that the received advertisements are received at application running on the communication resource utilizing apparatus 200. Note that the application executed at the communication resource utilizing apparatus 200 can include web browser, video distribution application, game application, Internet radio application, or the like.

The provider of the radio communication service with advertisements gives IDs for uniquely identifying users to the users who utilize the service. For example, the provider of the radio communication service with advertisements provides an ID for specifying connection of a user to a subscriber who approves provision of advertisements using a SIM card, or the like. Alternatively, the provider of the radio communication service with advertisements provides an ID by writing information of a rewritable SIM such as an eSIM and a software SIM in a memory region prepared in advance in the communication resource utilizing apparatus 200 which is used by the user who utilizes communication resources.

When the user who utilizes communication resources of the radio communication service with advertisements performs radio connection, the user sets charging information for each connected user, setting of communication resources to be provided, or the like, at the communication resource utilizing apparatus 200 by connecting to authenticating equipment (such as mobility management entity (MME)) in which profile for each connected user is defined in advance. In this event, dedicated band (band dedicated for advertisements) in which advertisements are to be placed is allocated to the user who approves to receive advertisements from the provider of the radio communication service with advertisements (an MNO or an MVNO) separately from communication resources to be utilized by the user.

The provider of the radio communication service with advertisements may ask the user as to whether or not advertisements may be output via a UI of specific app (such as web browser) after a radio link such as, for example, a mobile telephone network and a radio LAN network is established, as well as information as to whether or not advertisements may be output is added to information associated with an ID distributed in advance. In the case where the user allows output of advertisements, band dedicated for advertisements is allocated from the provider of the radio communication service with advertisements (an MNO or an MVNO) separately from radio band utilized by the user.

Further, the provider of the radio communication service with advertisements may embed information for asking the user whether or not advertisements may be output in a broadcast signal (such as, for example, Wi-Fi Beacon, iBeacon and Beacon cast) supported by the radio communication system. The communication resource utilizing apparatus 200 which receives a signal in which information asking the user whether or not advertisements may be output is embedded may ask the user whether or not advertisements may be output via a UI of specific app (such as web browser). In the case where the user permits output of advertisements, band dedicated for advertisements is allocated from the provider of the radio communication service with advertisements (an MNO or an MVNO) separately from radio band utilized by the user.

Further, the provider of the radio communication service with advertisements may embed information asking the user whether or not advertisements may be output in a multicast signal (such as, for example, Wi-Fi Multicast and eMBMS@LTE) supported by the radio communication system. The communication resource utilizing apparatus 200 which receives a signal in which the information asking the user whether or not advertisements may be output is embedded may ask the user whether or not advertisements may be output via a UI of specific app (such as web browser). In the case where the user permits output of advertisements, band dedicated for advertisements is allocated from the provider of the radio communication service with advertisements (an MNO or an MVNO) separately from radio band utilized by the user.

The provider of the radio communication service with advertisements provides arbitrary advertisement information to the user who utilizes communication resources by utilizing the band dedicated for advertisements. The communication resource utilizing apparatus 200 provides the received advertisements using, for example, dedicated application when the user utilizes app or service. The app or the service can be web browser, a specific display region within the game, a margin of the game app or the web browser, music listening app, movie viewing app, or the like.

Further, the user who utilizes communication resources of the radio communication service with advertisements can stop output of advertisements by the communication resource utilizing apparatus 200 when the user pays a full contract fee during utilization of the service and connects to the Internet using the communication resource utilizing apparatus 200. The communication resource utilizing apparatus 200 may have a function of switching ON/OFF of output of advertisements and a function of switching ON/OFF of charging. When the user pays a full contract fee and switches off output of advertisements, the communication resource trading server 300 releases band which has been allocated as the band dedicated for advertisements until then in response to a request signal from the communication resource utilizing apparatus 200 and switches connection to connection at a full contract fee.

Note that, as a request from the communication resource utilizing apparatus 200 which utilizes communication resources, a request which appropriately controls network equipment in which WEB-API is defined using a so-called WEB-I/F based on HTTP/REST can be used. As the provider of the radio communication service with advertisements (such as MNO/MVNO), an apparatus which appropriately controls network equipment in which WEB-API is defined using the above-described WEB-I/F can be used.

The communication resource trading server 300 may increase an amount of radio communication resources to be provided to the communication resource utilizing apparatus 200 in proportion to, for example, the number of times advertisements are displayed at the communication resource utilizing apparatus 200. Further, when, for example, the number of times of advertisements at the communication resource utilizing apparatus 200 reaches a predetermined value, the communication resource trading server 300 may increase an amount of radio communication resources to be provided to the communication resource utilizing apparatus 200 from the beginning next month or may increase quality of the radio communication resources.

### (Embodiment 4: game service with communication service)

An example of game service with communication service will be described next as an embodiment of the communication resource trading system 10 according to an embodiment of the present disclosure.

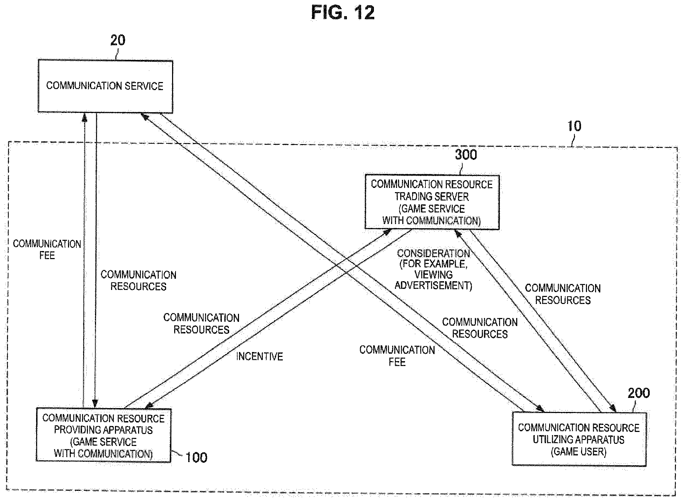

FIG. 12 is an explanatory diagram illustrating an embodiment of the communication resource trading system 10 according to an embodiment of the present disclosure. In Embodiment 4, the communication resource providing apparatus 100 and the communication resource trading server 300 provide game service with communication service. The communication resource utilizing apparatus 200 is an apparatus used by a user who utilizes the game service with communication service.

For example, a mobile virtual network operator (MVNO) which borrows and operates a line from a mobile network operator can provide the game service with communication service. Further, the mobile virtual network operator can be an OTT-MVNO which provides game content to be provided on the Internet. The communication resource providing apparatus 100 which provides radio communication resources can be the above-described MVNO or OTT-MVNO. The provider of the game service with communication service displays advertisements to the user or improves a customer value of a game to be provided in return for provision of radio communication resources.

The OTT-MVNO which provides a network game via radio access implements change of latency of play, high-speed download of an item with a high data volume, addition of simultaneous actions, latency with respect to an opponent, limitation of simultaneous actions, and an interference such as delay of an acquisition time of an item, to a game user who is the user by dynamically controlling a radio network.

The provider of the game service with communication service implements a mechanism for accepting reception of advertisements on the game service in return for acquisition of the above-described item and functions to be used on the game service at lower cost than usual or for free to the game user who is the user. In this event, the provider of the game service with communication service can also receive advertisement revenue from the third party who distributes the advertisements.

The provider of the game service with communication service gives IDs for uniquely identifying users to the users who utilize the service. For example, the provider of the radio communication service with advertisements provides an ID for specifying connection of a user to a subscriber who permits provision of advertisements through a SIM card, or the like. Alternatively, the provider of the radio communication service with advertisements provides an ID by writing information of a rewritable SIM such as eSIM and a software SIM in a memory region prepared in advance in the communication resource utilizing apparatus 200 which is used by the user who utilizes communication resources.

When the user who utilizes communication resources of the game service with communication service performs radio connection, the user sets charging information for each connected user, setting of communication resources to be provided, or the like, at the communication resource utilizing apparatus 200 by connecting to authenticating equipment (such as MME) in which profile for each connected user is defined in advance. In this event, dedicated band (band dedicated for advertisements) in which advertisements to be placed is allocated to the user who permits reception of advertisements from the provider of the game service with communication service (an MNO or an MVNO) separately from the communication resources to be utilized by the user.

The provider of the game service with communication service may ask the user whether or not advertisements may be output via a UI of specific app (such as web browser) after a radio link such as, for example, a mobile telephone network and a radio LAN network is established, as well as information as to whether or not advertisements may be output is added to information associated with an ID distributed in advance. In the case where the user permits output of advertisements, band dedicated for advertisements is allocated from the provider of the game service with communication service (an MNO or an MVNO) separately from radio band to be utilized by the user.

Further, the provider of the game service with communication service may embed information asking the user whether or not advertisements may be output in a broadcast signal (such as, for example, Wi-Fi Beacon, iBeacon and Beacon cast) supported by the radio communication system. The communication resource utilizing apparatus 200 which receives a signal in which the information asking the user whether or not advertisements may be output is embedded may ask the user whether or not advertisements may be output via a UI of specific app (such as web browser). In the case where the user permits output of advertisements, band dedicated for advertisements is allocated from the provider of the game service with communication service (an MNO or an MVNO) separately from radio band to be utilized by the user.

Further, the provider of the game service with communication service may embed information asking the user whether or not advertisements may be output in a multicast signal (such as, for example, Wi-Fi Multicast and eMBMS@LTE) supported by the radio communication system. The communication resource utilizing apparatus 200 which receives the signal in which information asking the user whether or not advertisements may be output is embedded, may ask the user whether or not advertisements may be output via a UI of specific app (such as web browser). In the case where the user permits output of advertisements, band dedicated for advertisements is allocated from the provider of the game service with communication service (an MNO or an MVNO) separately from radio band to be utilized by the user.

The user who provides the communication resources provides arbitrary advertisement information from, for example, the communication resource trading server 300, or the like, to the communication resource utilizing apparatus 200 by utilizing the band dedicated for advertisements. When the advertisement information is provided to the communication resource utilizing apparatus 200, the communication resource utilizing apparatus 200 provides the received advertisements using, for example, dedicated application when the user utilizes app or service. The app or the service can be web browser, a specific display region within the game, a margin of the game app or the web browser, music listening app, movie viewing app, or the like.

Further, the user who utilizes the communication resources of the game service with communication service can stop output of advertisements by the communication resource utilizing apparatus 200 when the user pays a full contract fee during utilization of the service and connects to the Internet using the communication resource utilizing apparatus 200. The communication resource utilizing apparatus 200 may have a function of switching ON/OFF of output of advertisements and a function of switching ON/OFF of charging. When the user pays a full contract fee and switches off output of advertisements, the communication resource trading server 300 releases band allocated as the band dedicated for advertisements until then in response to a request signal from the communication resource utilizing apparatus 200 and switches connection to connection at a full contract fee.

Note that, as a request from the communication resource utilizing apparatus 200 which utilizes communication resources, a request which appropriately controls network equipment in which WEB-API is defined using a so-called WEB-I/F based on HTTP/REST can be used. Also as the provider of the radio communication service with advertisements (such as an MNO and an MVNO), an apparatus which appropriately controls network equipment in which WEB-API is defined using the above-described WEB-I/F can be used.

An item useful in play of the game can be provided to the communication resource utilizing apparatus 200 from the communication resource trading server 300 through the WEB-I/F, or the like, while the user who utilizes communication resources is playing the game. The item useful in play of the game can include, for example, in a competition type game, in the case where there is a function which enables the user to advantageously play a game if high-speed response can be obtained, an item for enabling the communication resource utilizing apparatus 200 to transmit a command which makes a delay the smallest.

When the communication resource trading server 300 provides an item useful in play of the game as described above to the communication resource utilizing apparatus 200, the communication resource utilizing apparatus 200 confirms contract policy. While the communication resource trading server 300 provides the item for free or at lower cost than usual to a user who permits output of advertisements, the communication resource trading server 300 may charge a user who does not permit output of advertisements for acquisition of the item under permission of the player. Switching ON/OFF of a charging function, and switching ON/OFF of output of advertisements may be able to be set from the communication resource utilizing apparatus 200 at any time. Further, the item useful in play of the game as described above may be able to be traded among players of the game.

Examples of implementation of items and functions provided by the communication resource trading server 300 will be described.

### (Example 1) Low delay function

The low delay function is, for example, implemented on the radio network side through the WEB-API, or the like, from the communication resource utilizing apparatus 200 by selecting a radio system which makes a delay the smallest, setting a shortest path in the network, setting a content server whose response is the quickest, setting priority of a queue, or the like.

### (Example 2) Function of high-speed item download and simultaneous play by a plurality of users

A function of high-speed item download and simultaneous play by a plurality of users is implemented on the radio network side through the WEB-API, or the like, from the communication resource utilizing apparatus 200 in a similar manner to the low delay function by performing communication control so as to realize a path with the highest E2E throughput from a server from which an item is to be downloaded, setting a rate of media of a radio base station which can realize transmission at highest speed, setting priority of a transmission queue including radio communication resources, or the like.

### (Example 3) Function of providing damage to opponent

In a function of providing damage to an opponent, in a similar manner to the low delay function, or the like, an identifier of a designated current opponent is transmitted to the radio network side from the communication resource utilizing apparatus 200 through the WEB-API, or the like. The network side specifies a SIM-ID of a user corresponding to the identifier and performs band limitation, network delay, fallback to low-speed radio link, or the like, on the radio link of the opponent specified with the SIM-ID. In this manner, by applying a restriction on the radio link of the opponent, it is possible to hinder operability such as agility of the opponent. Note that, in this example, for example, the communication resource trading server 300 manages SIM-IDs and IDs of game players in association with each other.

In the case where there exist a plurality of players with respect to radio connection using the same SIM-ID, the network side constructs a logical link layer for each player. The network side has a mechanism for applying a restriction on each logical link layer with respect to an opponent to which an interference is to be provided.

Respective radio communication resources may be able to be shared or strengthened also among players. Further, radio communication resources may be able to be shared or strengthened among a plurality of logical link layers created in one physical link.

The network side may include a mechanism for charging among SIM-IDs so that radio communication resources, items and functions can be traded among players linking in different radio links. In a similar manner, the network side may include a mechanism for enabling distribution of advertisements and exchange of free items as a consideration for distribution of advertisements among players linking in different radio links.

In the case where the game service provided by the communication resource trading server 300 can be played not only by an individual but also by a group, the communication resource trading server 300 may provide a reward to the whole group. For example, the communication resource trading server 300 may provide a more favorable reward to a group in which radio communication resources are accommodated more frequently.

In the case where, while, in one group X, radio communication resources are accommodated ten times a week, in another group Y, radio communication resources are accommodated only once a week, the communication resource trading server 300 may provide a reward such as, for example, providing an item whose appearance ratio is low or increasing an appearance ratio of such an item, to the group X in which radio communication resources are accommodated more frequently.

### (Other embodiments)

For example, it is possible to apply the communication resource trading system 10 according to an embodiment of the present disclosure to service in which music can be delivered through streaming from a server on condition that a fixed fee is paid every month.

For example, in the case where the communication resource trading server 300 provides service of streaming music, and when the communication resource utilizing apparatus 200 receives music through streaming from the communication resource trading server 300, the communication resource utilizing apparatus 200 consumes radio communication resources. In this case, the communication resource utilizing apparatus 200 can restore the consumed radio communication resources by receiving provision of radio communication resources from the communication resource providing apparatus 100.

The communication resource utilizing apparatus 200 which receives provision of radio communication resources provides, for example, a created play list to the communication resource trading server 300 or accepts lowering of sound quality of music delivered from the communication resource trading server 300 in return for the provision.

Further, for example, in the case where a mesh network is created with a plurality of apparatuses, it is also possible to employ a configuration in which if one apparatus uses predetermined application, another apparatus can provide radio communication resources (band) to the apparatus.

For example, it is assumed that a mesh network is created with a plurality of apparatuses existing in one area, and one apparatus among these apparatuses executes watching application for watching over children in the area. In this case, radio communication resources to be used by the watching application may be accommodated by an apparatus which has sufficient radio communication resources becoming the communication resource providing apparatus 100 and the apparatus which executes the watching application becoming the communication resource utilizing apparatus 200.

### <2. Hardware configuration example>

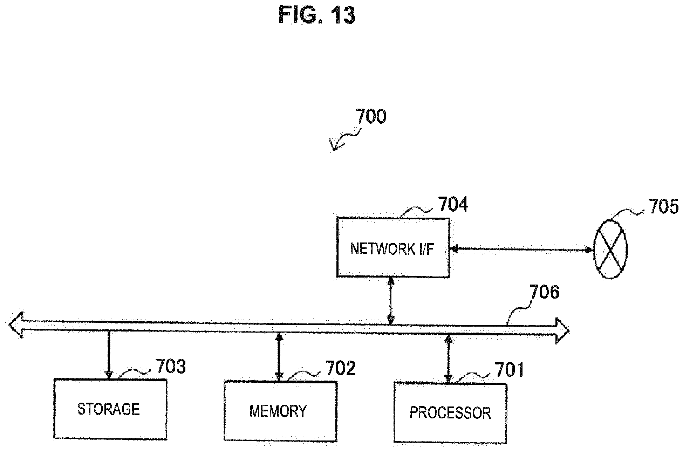

Next, a hardware configuration of the communication resource trading server 300 according to an embodiment of the present disclosure will be described with reference to FIG. 13. FIG. 13 is a block diagram showing an example of a schematic configuration of a server 700. The server 700 includes a processor 701, a memory 702, a storage 703, a network interface 704, and a bus 706.

The processor 701 may be, for example, a central processing unit (CPU) or a digital signal processor (DSP) and controls various functions of the server 700. The memory 702 includes a random access memory (RAM) and a read only memory (ROM) and stores a program executed by the processor 701 and data. The storage 703 can include a storage medium such as a semiconductor memory or a hard disk.

The network interface 704 is a wired communication interface for connecting the server 700 to a communicate network 705.

The bus 706 connects the processor 701, the memory 702, the storage 703 and the network interface 704 to one another. The bus 706 may include two or more buses having different speeds (for example, high-speed bus and low-speed bus).

In the server 700 shown in FIG. 13, one or more constituent elements (information acquisition unit 331 and/or control unit 333) included in the processing unit 330 described with reference to FIG. 4 may be mounted on the processor 701. As an example, a program for causing the processor to function as the above one or more constituent elements may be installed in the server 700, and the processor 701 may execute the program. As another example, a module including the processor 701 and the memory 702 may be mounted on the server 700, and the above one or more constituent elements may be mounted on the module. In this case, the above module may store the program for causing the processor to function as the above one or more constituent elements on the memory 702 and cause the processor 701 to execute the program. As described above, the server 700 or the above module may be provided as a device including the above one or more constituent elements, and the above program for causing the processor to function as the above one or more constituent elements may be provided. Further, a readable recording medium on which the above program is recorded may be provided.

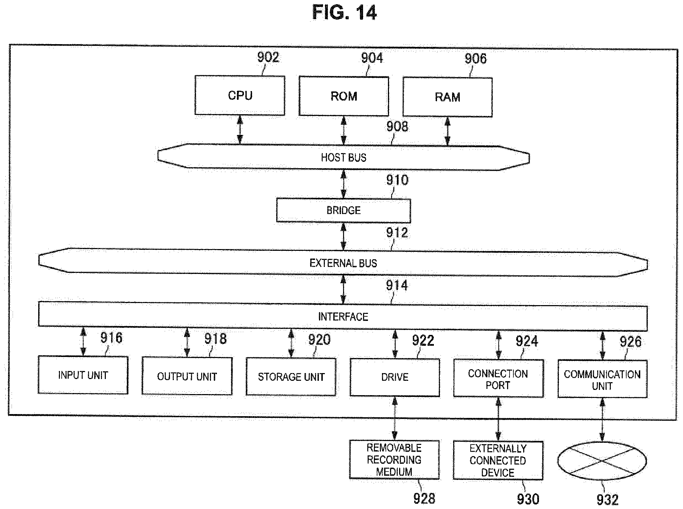

Next, a hardware configuration of the communication resource providing apparatus 100 and the communication resource utilizing apparatus 200 according to an embodiment of the present disclosure will be described with reference to FIG. 14. FIG. 14 is a block diagram illustrating a hardware configuration example of the communication resource providing apparatus 100 and the communication resource utilizing apparatus 200 according to the embodiment of the present disclosure. Each of the algorithms described above can be performed by using, for example, the hardware configuration of the information processing apparatus shown in FIG. 14. That is, the processing of each of the algorithms can be realized by controlling the hardware shown in FIG. 14 using a computer program.

Note that the mode of this hardware of hardware 900 shown in FIG. 14 is arbitrary, and may be, for example, a personal computer, a mobile information terminal such as a mobile phone, a PHS or a PDA, a game machine, a contact or non-contact IC chip, a contact or non-contact IC card, a loud speaker, a television set, a monitor, a wearable device, or various types of information appliances. Moreover, the PHS is an abbreviation for Personal Handy-phone System. Also, the PDA is an abbreviation for Personal Digital Assistant.

As shown in FIG. 14, this hardware 900 mainly includes a CPU 902, a ROM 904, a RAM 906, a host bus 908, and a bridge 910. Furthermore, this hardware includes an external bus 912, an interface 914, an input unit 916, an output unit 918, a storage unit 920, a drive 922, a connection port 924, and a communication unit 926. Moreover, the CPU is an abbreviation for Central Processing Unit. Also, the ROM is an abbreviation for Read Only Memory. Furthermore, the RAM is an abbreviation for Random Access Memory.

The CPU 902 functions as an arithmetic processing unit or a control unit, and controls entire operation or a part of the operation of each structural element on the basis of various programs recorded on the ROM 904, the RAM 906, the storage unit 920, or a removable recording medium 928. The ROM 904 is a device for storing a program to be read by the CPU 902 or data or the like used in an arithmetic operation. The RAM 906 temporarily or perpetually stores, for example, a program to be read by the CPU 902 or various parameters or the like appropriately changed in execution of the program.

These structural elements are connected to each other by, for example, the host bus 908 capable of performing high-speed data transmission. For its part, the host bus 908 is connected through the bridge 910 to the external bus 912 whose data transmission speed is relatively low, for example. Furthermore, the input unit 916 is, for example, a mouse, a keyboard, a touch panel, a button, a switch, or a lever. Also, the input unit 916 may be a remote controller that can transmit a control signal by using an infrared ray or other radio waves.

The output unit 918 is, for example, a display device such as a CRT, an LCD, a PDP or an ELD, an audio output device such as a speaker or headphones, a printer, a mobile phone, or a facsimile, that can visually or auditorily notify a user of acquired information. The CRT is an abbreviation for Cathode Ray Tube. In addition, the LCD is an abbreviation for Liquid Crystal Display. The PDP is an abbreviation for Plasma Display Panel. Also, the ELD is an abbreviation for Electro-Luminescence Display.

The storage unit 920 is a device for storing various data. The storage unit 920 is, for example, a magnetic storage device such as a hard disk drive (HDD), a semiconductor storage device, an optical storage device, or a magneto-optical storage device. The HDD is an abbreviation for Hard Disk Drive.

The drive 922 is a device that reads information recorded on the removable recording medium 928, for example, a magnetic disk, an optical disc, a magneto-optical disc, or a semiconductor memory, or writes information in the removable recording medium 928. The removable recording medium 928 is, for example, a DVD medium, a Blu-ray (registered trademark) medium, an HD-DVD medium, various types of semiconductor storage media, or the like. Of course, the removable recording medium 928 may be, for example, an electronic device or an IC card on which a non-contact IC chip is mounted. The IC is an abbreviation for Integrated Circuit.

The connection port 924 is, for example, a USB port, an IEEE1394 port, a SCSI, an RS-232C port, or a port for connecting an externally connected device 930 such as an optical audio terminal. The externally connected device 930 is, for example, a printer, a mobile music player, a digital camera, a digital video camera, or an IC recorder. The USB is an abbreviation for Universal Serial Bus. Also, the SCSI is an abbreviation for Small Computer System Interface.

The communication unit 926 is a communication device to be connected to a network 932, and is, for example, a communication card for a wired or wireless LAN, Bluetooth (registered trademark), or WUSB, an optical communication router, an ADSL router, or a device for contact or non-contact communication. In addition, the network 932 connected to the communication unit 926 is configured from a wire-connected or wirelessly connected network, and is the Internet, a home-use LAN, infrared communication, visible light communication, broadcasting, or satellite communication, for example. The LAN is an abbreviation for Local Area Network. Also, the WUSB is an abbreviation for Wireless USB. Furthermore, the ADSL is an abbreviation for Asymmetric Digital Subscriber Line.

In the hardware 900 illustrated in FIG. 14, one or more components (the information acquiring unit 151 and/or the control unit 153) included in the processing unit 150 of the communication resource providing apparatus 100 which has been described with reference to FIG. 2 may be implemented at the CPU 902. Further, in the hardware 900 illustrated in FIG. 14, one or more components (the information acquiring unit 251 and/or the control unit 253) included in the processing unit 250 of the communication resource utilizing apparatus 200 which has been described with reference to FIG. 2 may be implemented at the CPU 902.

### <3. Conclusion>

As described above, according to the embodiments of the present disclosure, the communication resource trading system 10 in which radio communication resources are accommodated is provided. The communication resource trading system 10 can provide a reward in accordance with an amount of radio communication resources provided to the communication resource utilizing apparatus 200 to the communication resource providing apparatus 100 which is a provider of the radio communication resources from the communication resource trading server 300. In the communication resource trading system 10 according to an embodiment of the present disclosure, it is possible to share radio communication resources among users while flexibly reflecting intention of users to utilize radio communication resources.

Processing steps in processes of the present specification may not necessarily be executed in a time series manner in the order described in the flowcharts or sequence diagrams. The processing steps in the processes may also be executed in, for example, a different order from the order described in the flowcharts or sequence diagrams, or may be executed in parallel.

Furthermore, a computer program for causing a processor (e.g., a CPU, a DSP, etc.) provided in a device of the present specification to function as the device (i.e., a computer program for causing the processor to execute operations of constituent elements of the above-described device) can also be created. In addition, a recording medium in which the computer program is recorded may be provided. Moreover, a device that includes a memory storing the computer program and one or more processors that can execute the computer program (e.g., a finished product or a module for a finished product (a component, a processing circuit, a chip, or the like) may also be provided. In addition, a method including operations of one or more constituent elements of the device (e.g., the information acquisition unit and/or the control unit) is also included in the technology of the present disclosure.

In addition, some or all of the functional blocks shown in the functional block diagrams used in the above description may be implemented by a server device that is connected via a network, for example, the Internet. In addition, configurations of the functional blocks shown in the functional block diagrams used in the above description may be implemented in a single device or may be implemented in a system in which a plurality of devices cooperate with one another. The system in which a plurality of devices cooperate with one another may include, for example, a combination of a plurality of server devices and a combination of a server device and a terminal device.

The preferred embodiments of the present disclosure have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

Further, the effects described in this specification are merely illustrative or exemplified effects, and are not limitative. That is, with or in the place of the above effects, the technology according to the present disclosure may achieve other effects that are clear to those skilled in the art from the description of this specification.

Additionally, the present technology may also be configured as below.
(1) A providing apparatus including:
   a control unit configured to provide radio communication resources allocated to an own user to another user in response to a request from the another user; and
   an acquiring unit configured to acquire a reward in service of application which uses radio communication resources in accordance with an amount of the radio communication resources provided to the another user.
(2) The providing apparatus according to (1),
   in which the control unit provides the radio communication resources to the another user via service for trading radio communication resources, and
   the acquiring unit acquires the reward in accordance with an amount of the provided radio communication resources.
(3) The providing apparatus according to (1) or (2),
   in which the control unit dynamically controls provision of the radio communication resources to the another user.
(4) The providing apparatus according to (3),
   in which the control unit dynamically controls a band or amount of radio communication resources to be provided to the another user.
(5) The providing apparatus according to any one of (1) to (4),
   in which the radio communication resources provided by the control unit are resources for radio communication performed by a device used by the another user via a device used by the own user.
(6) The providing apparatus according to any one of (1) to (5),
   in which the control unit provides the radio communication resources to the another user in return for payment of a consideration from the another user.
(7) The providing apparatus according to any one of (1) to (6),
   in which the control unit provides advertisement information to the another user when the control unit allocates the radio communication resources to the another user.
(8) The providing apparatus according to (7),
   in which the control unit provides the advertisement information using communication resources different from the radio communication resources to be allocated to the another user.
(9) The providing apparatus according to (8),
   in which the control unit stops provision of the advertisement information on condition that the another user pays a predetermined consideration.
(10) The providing apparatus according to any one of (1) to (9),
   in which the control unit judges whether or not radio communication resources are allowed to be allocated to the another user.
(11) The providing apparatus according to (10),
   in which the control unit judges whether or not radio communication resources are allowed to be allocated to the another user in accordance with a state of the radio communication resources allocated to the own user.
(12) The providing apparatus according to any one of (1) to (11),
   in which the acquiring unit acquires right to place an advertisement as a reward provided to the own user.
(13) The providing apparatus according to any one of (1) to (11),
   in which the acquiring unit acquires an item of a game as a reward provided to the own user.
(14) The providing apparatus according to any one of (1) to (13),
   in which the control unit provides radio communication using cellular to the another user as radio communication resources to be provided.
(15) The providing apparatus according to any one of (1) to (13),
   in which the control unit provides radio communication using Wi-Fi to the another user as radio communication resources to be provided.
(16) A utilizing apparatus including:
   a control unit configured to perform processing for requesting radio communication resources allocated to another user and bearing a predetermined burden regarding service of application which uses the radio communication resources in return for utilizing the radio communication resources.
(17) A communication resource trading system including:
   a providing apparatus which includes
      a provision control unit configured to provide radio communication resources allocated to an own user to another user in response to a request from the another user, and
      an acquiring unit configured to acquire a reward in accordance with an amount of the radio communication resources provided to the another user; and
   a utilizing apparatus which includes a utilization control unit configured to request radio communication resources allocated to the first user and bear a predetermined burden regarding service of application which uses the radio communication resources in return for utilizing the radio communication resources.
(18) A providing method including:
   providing radio communication resources allocated to an own user to another user in response to a request from the another user; and
   acquiring a reward in service of application which uses radio communication resources in accordance with an amount of the radio communication resources provided to the another user.
(19) A utilizing method including:
   a control unit configured to request radio communication resources allocated to another user and bear a predetermined burden regarding service of application which uses the radio communication resources in return for utilizing the radio communication resources.
(20) A control apparatus including:
   a control unit configured to allocate radio communication resources allocated to a first user to a second user in response to a request from the second user and provide a reward in service of application which uses the radio communication resources in accordance with an amount of the radio communication resources allocated to the second user, to the first user.
(21) The control apparatus according to (20),
   in which the control unit changes the reward to be provided in accordance with quality of the radio communication resources allocated to the first user.
(22) The control apparatus according to (20) or (21),
   in which the control unit changes the reward to be provided in accordance with an amount of the radio communication resources which can be allocated to the second user among the radio communication resources allocated to the first user.

### Reference Signs List

- 10: communication resource trading system
- 100: communication resource providing apparatus
- 200: communication resource utilizing apparatus
- 300: communication resource trading server

## Claims

1. A providing apparatus comprising:
a control unit configured to provide radio communication resources allocated to an own user to another user in response to a request from the another user; and
an acquiring unit configured to acquire a reward in service of application which uses radio communication resources in accordance with an amount of the radio communication resources provided to the another user.

2. The providing apparatus according to claim 1,
wherein the control unit provides the radio communication resources to the another user via service for trading radio communication resources, and
the acquiring unit acquires the reward in accordance with an amount of the provided radio communication resources.

3. The providing apparatus according to claim 1,
wherein the control unit dynamically controls provision of the radio communication resources to the another user.

4. The providing apparatus according to claim 3,
wherein the control unit dynamically controls a band or amount of radio communication resources to be provided to the another user.

5. The providing apparatus according to claim 1,
wherein the radio communication resources provided by the control unit are resources for radio communication performed by a device used by the another user via a device used by the own user.

6. The providing apparatus according to claim 1,
wherein the control unit provides the radio communication resources to the another user in return for payment of a consideration from the another user.

7. The providing apparatus according to claim 1,
wherein the control unit provides advertisement information to the another user when the control unit allocates the radio communication resources to the another user.

8. The providing apparatus according to claim 7,
wherein the control unit provides the advertisement information using communication resources different from the radio communication resources to be allocated to the another user.

9. The providing apparatus according to claim 8,
wherein the control unit stops provision of the advertisement information on condition that the another user pays a predetermined consideration.

10. The providing apparatus according to claim 1,
wherein the control unit judges whether or not radio communication resources are allowed to be allocated to the another user.

11. The providing apparatus according to claim 10,
wherein the control unit judges whether or not radio communication resources are allowed to be allocated to the another user in accordance with a state of the radio communication resources allocated to the own user.

12. The providing apparatus according to claim 1,
wherein the acquiring unit acquires right to place an advertisement as a reward provided to the own user.

13. The providing apparatus according to claim 1,
wherein the acquiring unit acquires an item of a game as a reward provided to the own user.

14. The providing apparatus according to claim 1,
wherein the control unit provides radio communication using cellular to the another user as radio communication resources to be provided.

15. The providing apparatus according to claim 1,
wherein the control unit provides radio communication using Wi-Fi to the another user as radio communication resources to be provided.

16. A utilizing apparatus comprising:
a control unit configured to perform processing for requesting radio communication resources allocated to another user and bearing a predetermined burden regarding service of application which uses the radio communication resources in return for utilizing the radio communication resources.

17. A communication resource trading system comprising:
a providing apparatus which includes
a provision control unit configured to provide radio communication resources allocated to an own user to another user in response to a request from the another user, and
an acquiring unit configured to acquire a reward in accordance with an amount of the radio communication resources provided to the another user; and
a utilizing apparatus which includes a utilization control unit configured to request radio communication resources allocated to the first user and bear a predetermined burden regarding service of application which uses the radio communication resources in return for utilizing the radio communication resources.

18. A providing method comprising:
providing radio communication resources allocated to an own user to another user in response to a request from the another user; and
acquiring a reward in service of application which uses radio communication resources in accordance with an amount of the radio communication resources provided to the another user.

19. A utilizing method comprising:
a control unit configured to request radio communication resources allocated to another user and bear a predetermined burden regarding service of application which uses the radio communication resources in return for utilizing the radio communication resources.

20. A control apparatus comprising:
a control unit configured to allocate radio communication resources allocated to a first user to a second user in response to a request from the second user and provide a reward in service of application which uses the radio communication resources in accordance with an amount of the radio communication resources allocated to the second user, to the first user.

21. The control apparatus according to claim 20,
wherein the control unit changes the reward to be provided in accordance with quality of the radio communication resources allocated to the first user.

22. The control apparatus according to claim 20,
wherein the control unit changes the reward to be provided in accordance with an amount of the radio communication resources which can be allocated to the second user among the radio communication resources allocated to the first user.
